# EUROPÄISCHE PATENTANMELDUNG

(11) **EP 1 396 782 A2**
(43) Veröffentlichungstag der Anmeldung: **10.03.2004**
(21) Anmeldenummer: 01121237.0
(22) Anmeldetag: 05.09.2001
(51) Int. Cl.: G06F 3/023, G06F 3/033

(54) **Bedienungseinrichtung für mit einem Netzwerk verbundene lokale und nicht-lokale Kommunikationseinrichtung**

(30) Priorität: 08.09.2000 DE 10044692
(71) Anmelder: Hecker, Thomas, 69168 Wiesloch (DE)
(72) Erfinder: Hecker, Thomas, 69168 Wiesloch (DE); Hecker, Heike Helga, 69168 Wiesloch (DE)

(57) **Zusammenfassung**

Es wird eine Einrichtung zur Auslösung der Übertragung von Daten aus einer nicht-lokalen Kommunikationseinrichtung (9) auf eine lokale Kommunikationseinrichtung (6), welche über ein Netzwerk (8) mit der nicht-lokalen Kommunikationseinrichtung (9) verbunden ist, mit einer Schnittstelle (5) zur lokalen Kommunikationseinrichtung (6), wenigstens einem Informationsträger (3), welcher lokal und nicht-lokal relevante Information beinhaltet, und ein Bedienelement (2) vorgeschlagen, welche von der lokalen Kommunikationseinrichtung (6) trennbar ist und welche bei der Betätigung des Bedienelements (2) wenigstens ein Steuersignal für die lokale Kommunikationseinrichtung (6) generiert, sodass lokal und nicht-lokal relevante Information von der Einrichtung auf die lokale Kommunikationseinrichtung (6) übertragen wird.

## Beschreibung

Die Erfindung betrifft eine Einrichtung zur Auslösung der Übertragung von Daten aus einer nicht-lokalen Kommunikationseinrichtung auf eine lokale Kommunikationseinrichtung, welche über ein Netzwerk mit der nicht-lokalen Kommunikationseinrichtung verbunden ist, mit einer Schnittstelle zur lokalen Kommunikationseinrichtung, wenigstens einem Informationsträger, welcher lokal und nicht-lokal relevante Information beinhaltet, und einem Bedienelement.

Typische Werbemaßnahmen im Bereich der Telekommunikation weisen eine unterbrochene Informationskette zwischen Produzenten oder Anbietern und Rezipienten oder potentiellen Kunden klassischen Werbemitteln und Telekommunikationsanwendungen auf. In Werbekampagnen, Werbemaßnahmen oder Verkaufsveranstaltungen wird häufig durch Werbeträger, wie z. B. Zeitschriften, Broschüren, Anzeigen, Prospekte, Kataloge, Werbebriefe, Flugblätter, Plakate, Kundenzeitschriften oder dergleichen, auf Produkte hingewiesen, in dem eine bestimmte Information, beispielsweise ein Domänenname oder eine Internetadresse, gegeben wird, an der in einem nicht-lokalen Netz von Kommunikationseinrichtungen entsprechende Anwendungen zu finden sind. Bei den Kommunikationseinrichtungen kann es sich um Computer, Telefone, Handys, Fernseher, Radiogeräte, Palmkonsolen oder dergleichen handeln, welche in einem Netzwerk, sei es elektronisch, optisch oder drahtlos, zur Informationsübertragung zwischen den einzelnen Knoten, den nicht-lokal verteilten Kommunikationseinrichtungen, verknüpft sind. Unter Anwendungen sind in diesem Zusammenhang jegliche Art von weiterführender Information, wie Texten, Auskünften, Arbeitsmasken, Applikationsprogrammen, Filmen, auditive oder visuelle Information oder e-commerce Anwendungen oder dergleichen zu verstehen. Die auf die Produkte oder mit ihnen verknüpften Anwendungen hinweisenden Werbebotschaften werden vom Rezipienten oder potentiellen Kunden aufgenommen und beispielsweise in Form einer Werbeschrift auf einem Werbeträger mitgeführt oder eigenständig niedergeschrieben oder gemerkt.

Mit einer lokalen Kommunikationseinrichtung, welche mit dem Netzwerk aus nicht-lokalen Kommunikationseinrichtungen verbunden ist, können derartige Produkte oder mit ihnen verknüpfte Anwendungen über eine Verbindung zum Austausch von Daten und/oder Steuersignalen zum Rezipienten oder potentiellen Kunden herangeholt werden. Typischerweise erfolgt das Aufrufen gewisser Steuerungs- oder Bedienungsprogramme zur Datenfernübertragung über die entsprechende, vom Hersteller der lokalen Kommunikationseinrichtung zur Verfügung gestellten Tastatur, über menügeführte Anweisungen, manueller Eingabe von Information oder die benutzergesteuerte Bedienung anderer Eingabeelemente wie einer Maus, eines Trackballs, eines Lichtgriffels oder dergleichen.

Es ist bekannt, dass mit der Betätigung eines Bedienelementes eine Reihe von Funktionen und Abläufen innerhalb der lokalen Kommunikationseinrichtung sowie der im Netzwerk befindlichen nicht-lokalen Kommunikationseinrichtungen ablaufen kann und dass Bedienungseinrichtungen für einen gewünschten Zweck gestaltbar sind.

In der EP 0 964 328 A2 ist ein Computersystem offenbart, welches einen schnellen Zugang zu vorkonfigurierten Internetseiten ermöglicht. Auf einer Tastatur oder einem ähnlichen Eingabegerät sind Tasten vorgesehen, welche bei Betätigung eindeutige Internetzugangssignale generieren. Eine Signalverarbeitungseinheit setzt das Computersystem mit dem die Internetseite vorhandenen nicht-lokalen Computer in Verbindung, entsprechende Anwendungssoftware wird gegebenenfalls gestartet, um beispielsweise e-commerce oder Verbindungen zum e-mail Versand aufzubauen. Ein Anwender kann durch Betätigen der entsprechenden Tasten schnellen Zugang zu einem im Netzwerk befindlichen nicht-lokalen Computer erhalten und entsprechende Operationen im Anschluss ausführen, wie das Herunterladen oder Aufladen anwenderbezogener Daten, ohne durch eine Reihe von Menüs oder Fenster auf einem Monitor navigieren zu müssen.

Nachteilig bei einer derartigen Einrichtung, insbesondere im Hinblick auf die Verwendung als Werbeträger, ist, dass die zum Aufruf der vorkonfigurierten Internetseiten vorgesehenen Tasten in der Tastatur des lokalen Kommunikationseinrichtung oder einem ähnlichen Eingabegerät integriert sind. Typischerweise sind die Funktionen dieser Tasten obschon generell programmierbar fest durch den Hersteller der Tastatur hinterlegt.

In der US 5,865,546 ist eine modulare Tastatur beschrieben, welche gestattet, einzelne Module in vorgesehener Ausnehmungen in einem Basis-Chassis mit Führungen und Anschlägen einzuführen und vermittels Schnittstellen zur Datenverbindung, also zur Herstellung elektrischen Kontaktes zwischen den Modulen und dem Basis-Chassis, zur Verfügung zu stellen. Jedes einzelne Tastaturmodul kann vom Anwender durch ein anderes ausgetauscht oder ersetzt werden. Es ist eine Kontrolleinheit im Basis-Chassis vorgesehen, welche die Art des über eine bestimmte Verbindungsschnittstelle angekoppelten Moduls bestimmt.

Nachteilig bei einer derartigen Einrichtung ist, dass die Bedienelemente der einzelnen Tastenmodule nur eine vorbestimmte Funktion für die lokale Kommunikationseinrichtung aufweisen.

Um Anwendungen in einer lokalen Kommunikationseinrichtung nutzen zu können, muss typischerweise vom Anwender eine Reihe von Arbeitsschritten, welche spezifisch für die lokale Kommunikationseinrichtung sind, erlernt werden. Eine zeitaufwendige Einschaltprozedur der entsprechenden lokalen Kommunikationseinrichtung folgt gewöhnlich eine manuelle Eingabeprozedur von Adressen, die meistens mit einem mühevollen hierarchischen Hinklicken über die entsprechende Tastatur verknüpft ist. Eine weitere Möglichkeit besteht in der gezielten Suche nach einer Anwendung im Netzwerk nicht-lokaler Kommunikationseinrichtungen durch Anleitung oder Suchmaschinen, welche vom Rezipienten oder potentiellen Kunden benutzt werden und in die mit der Werbebotschaft vermittelte Information über Domäne oder Internetadresse eingegeben wurde. Insbesondere Laien, älteren Personen und ungeübten Rezipienten oder potentiellen Kunden ist es nicht zuzumuten, die Information, wie eine Anwendung aus einem Netzwerk nicht-lokaler Kommunikationseinrichtungen abrufbar ist, nur in abstrakter Form, bildlicher oder schriftlicher Art, mit sich zu führen. Ein Bedienelement, wie es beispielsweise in der EP 0 964 328 A2 offenbart ist, ist jedoch nicht zusammen mit der Werbebotschaft auf dem Werbeträger mobil.

Der Erfindung liegt damit die Aufgabe zugrunde, eine Einrichtung zur Auslösung der Übertragung von Daten aus einer nicht-lokalen Kommunikationseinrichtung auf eine lokale Kommunikationseinrichtung zur Verfügung zu stellen, welche zusammen mit einer Werbebotschaft, der Information über die Lage einer bestimmten Anwendung in einem Netzwerk nicht-lokaler Kommunikationseinrichtungen, mit einem einfachen Bedienelement, das schnell von einer Person ohne Vorkenntnisse genutzt werden kann, mobil im Vergleich zur lokalen Kommunikationseinrichtung ist.

Diese Aufgabe wird durch eine Einrichtung mit den Merkmalen gemäß Anspruch 1 und dem Verfahren mit den Merkmalen gemäß Anspruch 13 gelöst.

Die erfindungsgemäße Einrichtung zur Auslösung der Übertragung von Daten aus einer nicht-lokalen Kommunikationseinrichtung auf eine lokale Kommunikationseinrichtung, welche über ein Netzwerk mit der nicht-lokalen Kommunikationseinrichtung verbunden ist, weist eine Schnittstelle zur lokalen Kommunikationseinrichtung, wenigstens einen Informationsträger, welcher lokale und nicht-lokal relevante Informationen beinhaltet und ein Bedienelement auf. Erfindungsgemäß ist eine trennbare Schnittstelle vorgesehen, sodass die Einrichtung mobil und unabhängig von der lokalen Kommunikationseinrichtung an einen anderen Ort gebracht werden kann. Bei Betätigung des Bedienelementes wird wenigstens ein Steuersignal für die lokale Kommunikationseinrichtung generiert, und lokal und nicht-lokal relevante Information wird von der Einrichtung auf die lokale Kommunikationseinrichtung übertragen. Vorteilhafterweise umfasst die lokal relevante Information den Start von Applikationsprogrammen, wie beispielsweise Programme, die Datenfernübertragung ermöglichen, und nicht-lokal relevante Informationen, wie Adressen von nicht-lokalen Kommunikationseinrichtungen im Netzwerk.

Die Übertragung von Daten aus einer nicht-lokalen Kommunikationseinrichtung auf eine lokale Kommunikationseinrichtung umfasst neben der Übertragung eines Signals aus der erfindungsgemäßen Einrichtung auf die lokale Kommunikationseinrichtung eine Übertragung von Information mit nicht-lokaler Relevanz von der erfindungsgemäßen Einrichtung auf die lokale Kommunikationseinrichtung, einen Austausch von Steuersignalen zwischen der lokalen und einer nicht-lokalen Kommunikationseinrichtung und einen Transfer von Daten von einer, nicht notwendigerweise derselben nicht-lokalen Kommunikationseinrichtung auf die lokale Kommunikationseinrichtung. Ebenso kann die nicht-lokal relevante Information Steuersignale oder Steuerbefehle umfassen, welche den Start von Applikationsprogrammen im Netzwerk auslösen.

Beispielsweise ist es mit der erfindungsgemäßen Einrichtung möglich, eine Intemetseite zu öffnen, einen Werbefilm auf der lokalen Kommunikationseinrichtung ablaufen zu lassen, ein interaktives, auszufüllendes Formular aufzurufen oder dergleichen zu erreichen.

Durch den Einsatz der erfindungsgemäßen Einrichtung, wie sie in Anspruch 1 oder den Unteransprüchen charakterisiert ist, und durch den Einsatz des Verfahrens, wie es in Anspruch 13 dargestellt ist, ergeben sich eine Reihe von Vorteilen.

Mit der erfindungsgemäßen Einrichtung ist es insbesondere möglich, schnell und direkt einen Zugriff auf Anwendungen, welche sich auf einen nicht-lokalen Kommunikationseinrichtung in einem Netzwerk befinden, zu ermöglichen. Die Einrichtung kann als Werbeträger von einem Produzenten oder Anbieter an einen Rezipienten oder potentiellen Kunden übergeben werden, trägt dabei sowohl die abstrakte Information über die Telekommunikationsanwendung als auch ein einfaches Bedienelement, mit welchem ohne besondere Vorkenntnisse diese Information genutzt werden kann, um auf weitere Anwendungen zurückzugreifen. Besonders vorteilhaft ist dabei, dass der Rezipient oder potentielle Kunde für das Aufrufen von derartigen Anwendungen nur einen Arbeitsschritt durchführen muss, nachdem die Einrichtung über die trennbare Schnittstelle mit der lokalen Kommunikationseinrichtung verbunden worden ist. Mit anderen Worten, die Vielzahl der Bedienungsschritte, welche typischerweise für den Zugriff auf eine Anwendung über die lokale Kommunikationseinrichtung auf die nicht-lokale Kommunikationseinrichtung notwendig sind, ist verringert, indem die Informationskette für den Rezipienten oder potentiellen Kunden vom Werbeträger, über die Werbebotschaft und die Kommunikationseinrichtung hin zur Anwendung nicht unnötigerweise unterbrochen wurde. Werbetechnisch bedingte Verluste werden dadurch vermieden, da die Bedienung der lokalen Kommunikationseinrichtung für den Rezipienten oder potentiellen Kunde wesentlich vereinfacht ist, sodass mit einem verbesserten Erfolg aufwendiger und kostenintensiv durchgeführter Werbekampagnen zu rechnen ist.

Weitere Vorteile und vorteilhafte Weiterbildungen der Erfindung werden anhand der nachfolgenden Figuren und deren Beschreibungen dargestellt. Es zeigen im Einzelnen:
- Figur 1: Topologie der miteinander in Verbindung stehenden erfindungsgemäßen Einrichtung, der lokalen Kommunikationseinrichtung und des Netzwerkes nicht-lokaler Kommunikationseinrichtungen,
- Figur 2A: besondere Ausführungsform der erfindungsgemäßen Einrichtung mit Anzeigevorrichtung und Werbeträgerfläche,
- Figur 2B: alternative Ausfuhrungsform der erfindungsgemäßen Einrichtung mit dreidimensional gestalteter Fläche,
- Figur 3: vorteilhafte Weiterbildung der Erfindung mit einem einsetzbaren Schaltelement,
- Figur 4: vorteilhafte Weiterbildung der Erfindung mit einer Anzahl von Bedienelementen.

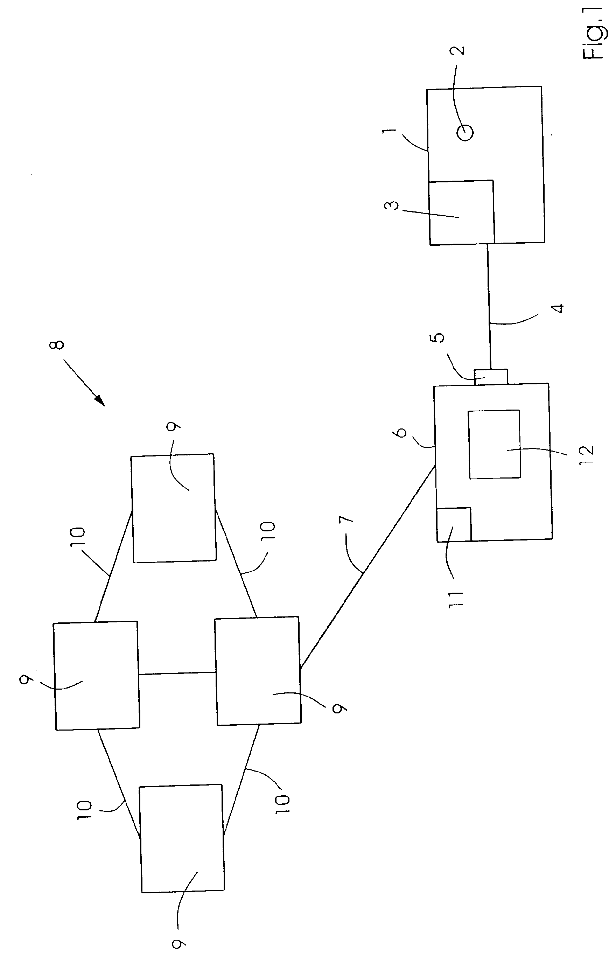

In der Figur 1 ist schematisch die Topologie der miteinander in Verbindung stehenden erfindungsgemäßen Einrichtung 1, der lokalen Kommunikationseinrichtung 6 und des Netzwerkes 8 nicht-lokaler Kommunikationseinrichtungen 9 dargestellt. Die erfindungsgemäße Bedieneinrichtung 1 weist ein Bedienelement, vorzugsweise einen Schalter, Joystick, Hebel oder dergleichen auf, bei dessen Betätigung wenigstens ein Steuersignal generiert wird. Des Weiteren weist die Bedieneinrichtung 1 wenigstens einen Informationsträger 3, typischerweise ein festes oder programmierbares Speichermedium, vorteilhafterweise ein magnetischer Datenträger, verbunden mit einer entsprechenden Elektronik zur Steuerung insbesondere von Input-/Outputvorgängen 3 auf. Die Bedieneinrichtung 1 steht vermittels einer Verbindung zum Austausch von Daten und/oder Steuersignalen 4 in Kontakt mit der lokalen Kommunikationseinrichtung 6. Dazu ist eine Schnittstelle 5 oder ein Interface vorgesehen, welches für den Fall einer festen Verbindung 4 vorteilhafterweise den typischen Standards, beispielsweise der RS 232 Schnittstelle, folgt.

Die erfindungsgemäße Bedieneinrichtung stellt also einen Adressengeber oder einen Informationsgeber dar, welcher mit einer lokalen Kommunikationseinrichtung 6 in Verbindung steht, welche die Information, insbesondere Domänennamen oder Internetadressen, aufnimmt. Die Verbindung kann dabei durch einen, wie in Figur 1 gezeigten, Leitungsanschluss erfolgen, oder aber weist in einer vorteilhaften Weiterbildung wenigstens einen drahtlosen Abschnitt, beispielsweise eine Infrarot-Übertragungsstrecke, auf. In einer weiteren vorteilhaften Weiterbildung kann die erfindungsgemäße Bedieneinrichtung 1 auch direkt in physischen Kontakt mit der lokalen Kommunikationseinrichtung gebracht werden, indem sie beispielsweise in eine vorgesehene Ausnehmung eingeführt wird.

Die als Adressengeber fungierende Bedieneinrichtung 1 enthält also in gespeicherter Form Informationen, welche sowohl relevant für die lokale Kommunikationseinrichtung als auch Information, welche für die nicht-lokale Kommunikationseinrichtung relevant ist. Dabei handelt es sich insbesondere um Information über die Lage, Domänenname oder Internetadresse, gewisser Anwendungen in einem Netzwerk. In einer vorteilhaften Weiterbildung kann es sich dabei auch um mehrere voneinander verschiedene Informationsgehalte handeln. In einer weiteren vorteilhaften Weiterbildung der Erfindung werden auch wenigstens ein Teil eines oder wenigstens ein komplettes Applikationsprogramm im Speichermedium 3 der erfindungsgemäßen Bedieneinrichtung 1 vorgehalten, das entweder vor Ausführung auf die lokale Kommunikationseinrichtung 6 übertragen oder direkt unter Rückgriff auf das Speichermedium 3 von der lokalen Kommunikationseinrichtung 6 ausgeführt werden kann.

Die lokale Kommunikationseinrichtung 6 steht mit einer Verbindung zum Austausch von Daten und/oder Steuersignalen in Kontakt mit einem Netzwerk 8, welches wenigstens eine, hier beispielsweise vier gezeigte, nicht-lokale Kommunikationseinrichtungen 9 aufweist, welche wiederum in Verbindung zum Austausch von Daten und/oder Steuersignalen durch die Verbindungen 10 stehen. Bei Betätigung des Bedienelementes 2, typischerweise in Form eines Schalters ausgeführt, der Bedienungseinrichtung 1 wird wenigstens ein Steuersignal derart generiert, dass die lokale Kommunikationseinrichtung 6 auf die im Informationsträger 3 der Bedienungseinrichtung 1 gespeicherten Information, welche lokale und nicht-lokale Relevanz aufweist, zurückgreift. Die lokale Kommunikationseinrichtung 6, welche typischerweise wenigstens eine Steuereinheit 11 und eine Ausgabeeinheit 12, typischerweise ein Monitor oder ein Drucker, aufweist, startet gewisse Programme zur Datenfernübertragung, um vermittels der durch die Bedienungseinrichtung zur Verfügung gestellten Information über die Lage gewisser Anwendungen auf einer nicht-lokalen Kommunikationseinrichtung 9 im Netzwerk 8 zu erhalten. Es findet ein Austausch von Daten und/oder Steuersignalen über die Verbindung 7 zwischen der lokalen Kommunikationseinrichtung 6 und dem Netzwerk 8 statt.

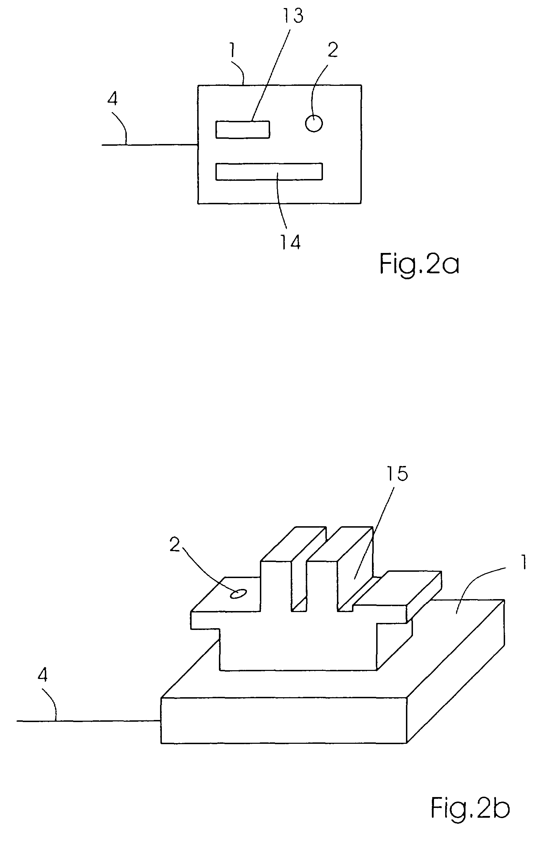

In der Figur 2 sind bevorzugte Ausführungsformen der erfindungsgemäßen Einrichtung schematisch dargestellt. Im Teilbild A ist eine mögliche Ausführungsform der erfindungsgemäßen Einrichtung gezeigt, welche eine Anzeigevorrichtung 13 und eine gestaltete Fläche 14 aufweist. Auf der Anzeigvorrichtung 13 können entsprechende Zusatzinformationen, welche auf dem Informationsträger 3 mit der Bedienungseinrichtung 1 zur Verfügung gestellt oder aber von der lokalen oder einer der nicht-lokalen Kommunikationseinrichtungen 6 oder 9 erhalten wurden. Aus ergonomischen und/oder ästhetischen Gründen kann wenigstens ein Teil der Bedienungseinrichtung 1 gestaltet werden. Vorteilhafterweise handelt es sich dabei um eine gestaltete Werbefläche 14. Die Bedienungseinrichtung 1 steht vermittels der Verbindung zum Austausch von Daten und/oder Steuersignalen 4 mit einer hier nicht gezeigten lokalen Kommunikationseinrichtung in Verbindung. Das Teilbild B zeigt eine alternative Ausführungsform der erfindungsgemäßen Einrichtung. Ein Teil der Bedieneinrichtung 1, welche vermittels der Verbindung zum Austausch von Daten und/oder Steuersignalen 4 in Kontakt mit einer hier nicht gezeigten lokalen Kommunikationseinrichtung steht, kann auch dreidimensional gestaltet sein. Vorteilhafterweise handelt es sich dabei um eine ergonomisch und/oder ästhetisch ansprechende Form 15. Insbesondere kann es sich dabei um ein Formmodel oder ein Symbol einer Maschine, beispielsweise einer Druckmaschine, handeln, also werbetechnisch gestaltet sein. Beispielsweise kann es sich bei der dreidimensionalen Form 15 auch um eine Produktkarte, insbesondere eine Musikkarte oder eine Sprachkarte handeln, also eine als Werbeträger gestaltete Karte, handeln. Im Fall der Musikkarte oder Sprachkarte wird auditive Information von der nicht-lokalen Kommunikationseinrichtung auf die lokale Informationseinrichtung vermittels der erfindungsgemäßen Einrichtung übertragen.

Eine dreidimensionale Form 15 kann die Funktion eines vorteilhaften Studienobjektes für Bildung, Ausbildung und Training, insbesondere für eine Maschine, haben. Durch Betätigen oder Berühren der dreidimensionalen Form 15 an verschiedenen Punkten können multimediale Anwendung von der nicht-lokalen Kommunikationseinrichtung 9 auf die lokale Kommunikationseinrichtung 6 übertragen werden, so dass komplexe Sachverhalte, beispielsweise die Maschinenbedienung betreffend, dargestellt werden können.

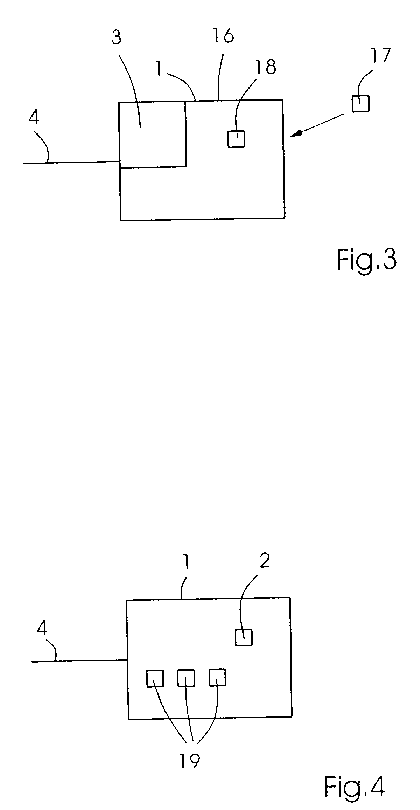

Die Figur 3 zeigt eine vorteilhafte Weiterbildung der Erfindung. Die Bedieneinrichtung 1 weist dabei wenigstens zwei Teile auf. Der erste Teil umfasst ein Basis-Chassis 16, welches den Informationsträger 3 der Bedienungseinrichtung 1 beinhaltet. Der zweite Teil stellt ein Einsetzelement 17 dar, für das eine Schnittstelle 18 im Basis-Chassis 16 vorgesehen ist. Das Einsetzelement 17 kann beispielsweise ein Schalter, ein Hebel, eine Karte oder ein anderer Informationsträger sein. Durch die Schnittstelle 18 wird beispielsweise ein elektrischer oder ein optischer Kontakt zwischen dem Schaltelement 17 und dem Informationsträger 3 im Basis-Chassis 16 hergestellt oder unterbrochen. Das Einsetzelement 17 kann in einer vorteilhaften Weiterbildung auch einen programmierbaren oder festen Speicher aufweisen, welcher in Zusammenwirkung mit dem Informationsträgern 3 des Basis-Chassis 16 die Information mit lokaler oder nicht-lokaler Relevanz der lokalen 6 oder wenigstens einer der nicht-lokalen Kommunikationseinrichtungen 9 zur Verfügung stellt. Mit anderen Worten kann das Einsetzelement 17 derart ausgeführt sein, dass es teilweise oder ganz Vorrichtungen aufweist, welche Funktionen des Bedienelementes 1 ausführen oder auslösen.

In einer anderen vorteilhaften Weiterbildung können das Einsetzerelement 17 und die zugehörige Schnittstelle 18 derart ausgeführt sein, dass Einsetzelemente 17 mit verschiedenen Funktionen mit dem Basis-Chassis 16 verbunden werden können, sodass unterschiedliche Informationen durch die Bedieneinrichtung 1 der lokalen Kommunikationseinrichtung 6 zur Verfügung gestellt werden kann. Dabei kann es sich insbesondere um mehrere Adressen, Lageinformationen gewisser Anwendungen in nicht-lokalen Kommunikationseinrichtungen 9 im Netzwerk 8, handeln. In einer weiteren vorteilhaften Weiterbildung kann die Schnittstelle 18 zwischen dem Einsetzelement 17 und dem Basis-Chassis 16 auch wenigstens einen drahtlosen Abschnitt aufweisen.

Durch eine vorteilhafte Weiterbildung der erfindungsgemäßen Einrichtung, wie sie prinzipiell in Figur 3 gezeigt ist, ist eine individuelle Anpassung an den Bediener der lokalen Kommunikationseinrichtung einfach und leicht möglich. Das Einsetzelement 17 kann alle oder wenigstens einige zur Benutzung der Bedieneinrichtung notwendigen Vorgaben umfassen.

In Figur 4 ist eine vorteilhafte Weiterbildung der Erfindung mit einer Anzahl von verschiedenen Bedienelementen 19 gezeigt. Die Bedieneinrichtung 1, welche mit der Verbindung zum Austausch von Daten und/oder Steuersignalen in Kontakt mit einer hier nicht gezeigten lokalen Kommunikationseinrichtung steht, weist dabei neben dem Bedienelement 2 eine Anzahl weiterer Bedienelemente 19 beispielsweise Schalter oder Hebel, auf. Bei Betätigung wenigstens eines der Bedienelemente 19 wird wenigstens ein Steuersignal für die lokale Kommunikationseinrichtung generiert. Typische Funktionen, welche durch die Betätigung eines dieser Bedienelemente 19 ausgelöst werden kann, sind Drucken, das Aufrufen verschiedener Internetseiten oder das Aufrufen einer bestimmten Anwendung, wie die Versendung von elektronischen Nachrichten oder Bestellungen, e-mail oder e-commerce Anwendungen. Es versteht sich, dass die einzelnen Bedienelemente 19 individuell auf den Benutzer der lokalen Kommunikationseinrichtung 6 zugeschnitten sein können.

Die erfindungsgemäße Bedieneinrichtung 1 eignet sich zur gezielten Auswahl und Verbindung von auf nicht-lokalen Kommunikationseinrichtungen 9 einem Rezipienten, einem Kunden oder einem potentiellen Kunden schnell und bequem zur Verfügung gestellt wird, indem die erfindungsgemäße Bedieneinrichtung 1 einen Adressengeber oder Informationsgeber umfasst. Die erfindungsgemäße Bedieneinrichtung 1 ist individuell für eine bestimmte Zielgruppe gestaltbar, kann also die Kundenbindung an den Produzenten oder Anbieter erhöhen. Eine werbetechnisch gestaltete Bedienungseinrichtung 1 eignet sich beispielsweise für Marketingverfahren und Marketingaktionen für verschiedene Produkte. Des Weiteren kann vorteilhafterweise die Kundenunterstützung durch den Produzenten oder Anbieter verbessert werden. Die aus dem Netzwerk 8 nicht-lokaler Kommunikationseinrichtungen 9 übertragenen Daten beinhalten vorteilhafterweise Information, welche relevant zur Steuerung oder Bedienung eines Produktes, beispielsweise einer Maschine, relevant sind. Insbesondere kann dabei die Information Parameter zur Maschineneinstellung umfassen.

Es ist darüber hinaus auch möglich, dass die Wirkung beziehungsweise Nutzungsdauer der erfindungsgemäßen Einrichtung einer Beschränkung unterliegen kann. Beispielsweise kann vorgesehen sein, dass ein Schlüssel zur Verifikation der Zugangs- oder Nutzungsberechtigung auf dem Informationsträger 3 hinterlegt ist, welcher seine Gültigkeit nach Ablauf einer vorgegebenen Zeitdauer verliert. Des weiteren können auf dem Informationsträger 3 für bekannte Kryptographieverfahren relevante Daten, wie Schlüsselinformationen, hinterlegt werden. Derartige Schlüssel können eine Mehrfachverwendung zulassen oder Schlüssel zur einmaligen Verwendung sein.

### Bezugszeichenliste

- 1: Bedieneinrichtung
- 2: Bedienelement
- 3: Informationsträger
- 4: Verbindung zum Austausch von Daten und/oder Steuersignalen
- 5: Schnittstelle
- 6: lokale Kommunikationseinrichtung
- 7: Verbindung zum Austausch von Daten und/oder Steuersignalen
- 8: Netzwerk
- 9: nicht-lokale Kommunikationseinrichtung
- 10: Verbindung zum Austausch von Daten und/oder Steuersignalen
- 11: Steuereinheit
- 12: Ausgabeeinheit
- 13: Anzeigevorrichtung
- 14: gestaltete Fläche
- 15: dreidimensionale Form
- 16: Basis-Chassis
- 17: Einsetzelement
- 18: Schnittstelle
- 19: Bedienelement

## Patentansprüche

1. Einrichtung zur Auslösung der Übertragung von Daten aus einer nicht-lokalen Kommunikationseinrichtung (9) auf eine lokale Kommunikationseinrichtung (6), welche über ein Netzwerk (8) mit der nicht-lokalen Kommunikationseinrichtung (9) verbunden ist, mit einer Schnittstelle (5) zur lokalen Kommunikationseinrichtung (6), wenigstens einem Informationsträger (5), der lokale und nicht-lokal relevante Information beinhaltet, und ein Bedienelement (2),
**dadurch gekennzeichnet,**
**dass** die Schnittstelle (5) trennbar ist und dass bei Betätigung des Bedienelementes (2) wenigstens ein Steuersignal für die lokale Kommunikationseinrichtung (6) generiert und lokal und nicht-lokal relevante Information von der Einrichtung (1) auf die lokale Kommunikationseinrichtung (6) übertragen wird.

2. Einrichtung zur Auslösung der Übertragung von Daten aus einer nicht-lokalen Kommunikationseinrichtung (9) auf eine lokale Kommunikationseinrichtung (6) gemäß Anspruch 1,
**dadurch gekennzeichnet,**
**dass** die lokal relevante Information Steuersignale oder Befehle umfasst, welche den Start von Applikationsprogrammen auslösen.

3. Einrichtung zur Auslösung der Übertragung von Daten aus einer nicht-lokalen Kommunikationseinrichtung (9) auf eine lokale Kommunikationseinrichtung (6) gemäß Anspruch 1 oder Anspruch 2,
**dadurch gekennzeichnet,**
**dass** die nicht-lokal relevante Information Adressen oder Domänennamen von nicht-lokalen Kommunikationseinrichtungen (9) im Netzwerk (8) umfasst.

4. Einrichtung zur Auslösung der Übertragung von Daten aus einer nicht-lokalen Kommunikationseinrichtung (9) auf eine lokale Kommunikationseinrichtung (6) gemäß einem der oberen Ansprüche,
**dadurch gekennzeichnet,**
**dass** die nicht-lokal relevante Information Steuersignale oder Steuerbefehle umfasst, welche den Start von Applikationsprogrammen im Netzwerk (8) umfasst.

5. Einrichtung zur Auslösung der Übertragung von Daten aus einer nicht-lokalen Kommunikationseinrichtung (9) auf eine lokale Kommunikationseinrichtung (6) gemäß einem der oberen Ansprüche,
**dadurch gekennzeichnet,**
**dass** der Informationsträger (3) programmierbar ist.

6. Einrichtung zur Auslösung der Übertragung von Daten aus einer nicht-lokalen Kommunikationseinrichtung (9) auf eine lokale Kommunikationseinrichtung (6) gemäß einem der oberen Ansprüche,
**dadurch gekennzeichnet,**
**dass** die Schnittstelle (5) wenigstens einen drahtlosen Abschnitt aufweist.

7. Einrichtung zur Auslösung der Übertragung von Daten aus einer nicht-lokalen Kommunikationseinrichtung (9) auf eine lokale Kommunikationseinrichtung (6) gemäß einem der oberen Ansprüche,
**dadurch gekennzeichnet,**
**dass** die Einrichtung eine Anzeigevorrichtung (13) aufweist.

8. Einrichtung zur Auslösung der Übertragung von Daten aus einer nicht-lokalen Kommunikationseinrichtung (9) auf eine lokale Kommunikationseinrichtung (6) gemäß einem der oberen Ansprüche,
**dadurch gekennzeichnet,**
**dass** die Einrichtung wenigstens eine ergonomisch, ästhetisch oder werbetechnisch gestaltete Oberfläche oder Form aufweist.

9. Einrichtung zur Auslösung der Übertragung von Daten aus einer nicht-lokalen Kommunikationseinrichtung (9) auf eine lokale Kommunikationseinrichtung (6) gemäß einem der oberen Ansprüche,
**dadurch gekennzeichnet,**
**dass** die Einrichtung wenigstens einen ersten und einen zweiten Teil (16, 17) aufweist, welche miteinander über eine Schnittstelle (18) miteinander verbunden sind, wobei der erste Teil (16) den Informationsträger (3) umfasst und der zweite Teil ein Einsetzelement (17) ist.

10. Einrichtung zur Auslösung der Übertragung von Daten aus einer nicht-lokalen Kommunikationseinrichtung (9) auf eine lokale Kommunikationseinrichtung (6) gemäß Anspruch 9,
**dadurch gekennzeichnet,**
**dass** die Schnittstelle (18) zwischen dem ersten und zweiten Teil (16, 17) wenigstens einen drahtlosen Abschnitt aufweist.

11. Einrichtung zur Auslösung der Übertragung von Daten aus einer nicht-lokalen Kommunikationseinrichtung (9) auf eine lokale Kommunikationseinrichtung (6) gemäß einem der oberen Ansprüche,
**dadurch gekennzeichnet,**
**dass** die aus dem Netzwerk (8) übertragenen Daten Informationen beinhalten, die relevant zur Steuerung einer Maschine sind.

12. Einrichtung zur Auslösung der Übertragung von Daten aus einer nicht-lokalen Kommunikationseinrichtung (9) auf eine lokale Kommunikationseinrichtung (6) gemäß einem der oberen Ansprüche,
**dadurch gekennzeichnet,**
**dass** die aus dem Netzwerk (8) übertragenen Daten Information beinhalten, welche Parameter zur Einstellung einer Maschine umfassen.

13. Verfahren zur Übertragung von Daten aus einer nicht-lokalen Kommunikationseinrichtung (9) in einem Netzwerk (8) auf eine lokale Kommunikationseinrichtung (6) mit einer Einrichtung gemäß einem der oberen Ansprüche und mit den folgenden Schritten:
- Übertragung eines Signals aus der Einrichtung an die lokale Kommunikationseinrichtung (6)
- Austausch von Steuersignalen zwischen der lokalen Kommunikationseinrichtung und einer nicht-lokalen Kommunikationseinrichtung (8)
- Transfer von Daten von einer nicht-lokalen Kommunikationseinrichtung (8) auf die lokalen Kommunikationseinrichtung (6)
**gekennzeichnet durch**
- Übertragung von Information mit nicht-lokaler Relevanz von der Einrichtung auf die lokale Kommunikationseinrichtung (6).
